# EUROPÄISCHE PATENTSCHRIFT

(11) **EP 1 584 408 B1**
(45) Veröffentlichungstag und Bekanntmachung des Hinweises auf die Patenterteilung: **03.10.2007**
(21) Anmeldenummer: 05002270.6
(22) Anmeldetag: 03.02.2005
(51) Int. Cl.: B23P 11/02, H05B 6/14

(54) **Einrichtung zum thermischen Spannen und Entspannen von Werkzeugen in Schrumpffuttern**
Device for thermal clamping and release of tools in a shrink-fit chuck
Dispositif pour le serrage et le désserrage thermiques d'outils dans un mandrin à ajustement fretté

(30) Priorität: 20.03.2004 DE 202004004424 U
(43) Veröffentlichungstag der Anmeldung: 12.10.2005
(73) Patentinhaber: Bilz Werkzeugfabrik GmbH & Co. KG, 73760 Ostfildern (DE)
(72) Erfinder: Steudte, Rüdiger, 73770 Denkendorf (DE)
(74) Vertreter: Kratzsch, Volkhard

(56) Entgegenhaltungen:
- DE-U1- 29 820 838
- US-A- 6 161 309
- US-A1- 2001 024 020
- US-A1- 2003 088 972
- US-A1- 2004 010 897
- PATENT ABSTRACTS OF JAPAN Bd. 2002, Nr. 07, 3. Juli 2002 (2002-07-03) & JP 2002 079426 A (MIYADEN CO LTD), 19. März 2002 (2002-03-19)

## Beschreibung

Die Erfindung bezieht sich auf eine Einrichtung zum thermischen Spannen und Entspannen von Werkzeugen in Schrumpffuttern mit den Merkmalen im Oberbegriff des Anspruchs 1. Eine solche Einrichtung ist aus der Dokument JP 2002 079 426 A bekannt.

Es sind auch Einrichtungen dieser Art bekannt (DE 10025004 A1), bei denen die Kühleinrichtung einen besonderen Kühladapter mit einsetzbarem, an die jeweilige Form des verwendeten Schrumpffutters geometrisch angepassten Wechseleinsatz aufweist, wobei der Kühladapter innere Kühlkanäle enthält, durch die ein flüssiges Kühlmittel, z.B. Kühlwasser, zur Kühlung hindurchgeleitet wird. Für die Kühlung des Schrumpffutters wird der an die Futtergeometrie angepasste Kühladapter mit Wechseleinsatz auf das Schrumpffutter aufgesteckt. Die auf diese Weise erreichte indirekte Kühlung ist relativ langwierig, was sich ungünstig auf die Produktivität auswirkt. Ferner ist es notwendig, für jede Schrumpffuttergeometrie einen daran angepassten Kühladapter bereitzuhalten und zu verwenden, was einen erheblichen Aufwand bedingt.

Ferner ist eine Einrichtung zum thermischen Spannen und Entspannen von Werkzeugen in Schrumpffuttern bekannt (Patent Abstracts of Japan Bd. 2002, Nr. 07, 3. Juli 2002 (2002-07-03) & JP 2002 079426 A (MIYADEN CO LTD), 19.März 2002 (2002-03-19), bei der statt eines Kühlventilators ein Kühlmantel oder Kühltank vorgesehen ist, der innerhalb eines Gehäuses der Einrichtung angeordnet ist.

Aus DE 298 20 838 U1 ist es ferner bekannt, bei einer Schrumpfeinrichtung eine Ablagestation vorzusehen, in der die aus einer Reduzierhülse entnommene Werkzeugaufnahme und/oder die Reduzierhülse selbst abkühlbar sind. Dazu ist vorgesehen, dass das Gehäuse einen mit Öffnungen versehenen Bereich aufweist, unter dem ein Gebläse angeordnet ist.

Der Erfindung liegt die Aufgabe zugrunde, eine Einrichtung der eingangs genannten Art zu schaffen, die einen reduzierten Aufwand bedingt und eine schnelle Kühlung ermöglicht mit einhergehender Zeitersparnis und Steigerung der Produktivität.

Die Aufgabe ist bei einer Einrichtung der eingangs genannten Art gemäß der Erfindung durch die Merkmale im Anspruch 1 gelöst. Weitere besondere Erfindungsmerkmale und Ausgestaltungen dazu ergeben sich aus den darauf folgenden Ansprüchen.

Die Einrichtung gemäß der Erfindung ermöglicht eine direkte Kühlung der Aufnahme mit Schrumpffutter durch direkte Beaufschlagung dieser mit vorzugsweise flüssigem Kühlmittel, z.B. Kühlwasser, von außen, das unter Druck von außen aufgespritzt wird. Das Kühlwasser wird mittels einer Leiteinrichtung konzentriert wieder abgeführt und in die Kühlmittelversorgung, z.B. einen Kühlmittelbehälter, zurückgeführt. Die direkte Beaufschlagung der Aufnahme mit Schrumpffutter mit flüssigem Kühlmittel ermöglicht eine sehr schnelle Abkühlung und dadurch einen Zeitgewinn, der eine Steigerung der Produktivität zur Folge hat. Vorteilhaft ist ferner, dass durch die äußere Kühlmittelbeaufschlagung eine derartige schnelle Kühlung für alle möglichen Schrumpffuttergeometrien ohne etwaige Anpassung an die Futtergeometrie möglich ist. Dies reduziert den Aufwand und auch die Rüstzeiten weiter. Außerdem wird die Bedienersicherheit erhöht, da nach sehr schneller Abkühlung das Schrumpffutter auf die Ausgangstemperatur des Kühlmittels heruntergekühlt und nicht mehr heiß ist und daher eine etwaige Verletzungsgefahr ausgeschlossen ist. Bei einer Ausführung der Einrichtung konnte erreicht werden, dass der gesamte Kühl- und Trockenvorgang nur ca. 30 Sekunden beträgt und nach dieser Zeit das Schrumpffutter mit eingeschrumptem Werkzeug bereits entnommen werden kann. Bei allem ist die Einrichtung einfach, kostengünstig und betriebssicher.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht einer Einrichtung zum thermischen Spannen und Entspannen von Werkzeugen in Schrumpffuttern in einer Ausgangsposition,
- Fig. 2: eine schematische, teilweise geschnittene Seitenansicht der Einrichtung in Fig. 1, bei der die Aufnahme mit Schrumpffutter und Werkzeug jedoch aus der Ausgangsposition gemäß Fig. 1 heraus nach unten bewegt ist,
- Fig. 3: eine schematische, teilweise geschnittene Draufsicht von Teilen der Einrichtung in Fig. 1,
- Fig. 4: einen schematischen Schnitt eines Teil der Einrichtung in Pfeilrichtung IV - IV in Fig. 3,
- Fig. 5: einen schematischen Schnitt eines Teil der Einrichtung in Pfeilrichtung V - V in Fig. 3.

In den Zeichnungen ist eine auch als Schrumpfgerät bezeichnete Einrichtung 10 in Form eines Standgeräts gezeigt, die zum thermischen Spannen und Entspannen von Werkzeugen 11 in Schrumpffuttern 12 dient und es ermöglicht, gewünschtenfalls im Dauerbetrieb eine große Anzahl von hochgeschwindigkeitstauglichen Werkzeugen 11 in kurzer Folge mittels Schrumpftechnik zu spannen oder zu entspannen. Die Einrichtung 10 weist ein Oberteil 13 und einen Unterschrank 14 auf, in dem einzelne Versorgungseinheiten der Einrichtung 10 untergebracht sind. Die Einrichtung 10 weist eine Aufnahme 15 auf, mittels der ein Schrumpffutter 12 auswechselbar aufnehmbar ist. Bestandteil der Einrichtung 10 ist ferner eine Erwärmungseinrichtung 16, die in Pfeilrichtung 17 zur Aufnahme 15 mit Schrumpffutter 16 hin und gegensinnig dazu davon weg beweglich ist. Die Erwärmungseinrichtung 16 weist einen abstehenden Griff 18 und im Inneren z.B. eine nicht weiter gezeigte Induktionsspule auf. Sie ist mittels des Griffes 18 von Hand in Pfeilrichtung 17 und gegensinnig bewegbar.

Die Einrichtung 10 ist ferner mit einer Kühleinrichtung 20 versehen, die zur Abkühlung des zum Zwecke des Einschrumpfens des Werkzeugs 11 erwärmten Schrumpffutters 12 dient. Die Kühleinrichtung 20 weist mindestens einen Kühlmittelverteiler 21, 22 auf, der relativ zur Aufnahme 15 mit aufnehmbarem Schrumpffutter 12 beweglich ist und ein vorzugsweise flüssiges Kühlmittel, z.B. Kühlwasser, führt. Beim gezeigten Ausführungsbeispiel sind zwei gleichwirkende Kühlmittelverteiler 21 und 22 vorgesehen. Weitere Details dazu sind zur Vereinfachung nur anhand des einen Kühlmittelverteilers 21 nachfolgend erläutert. Der Kühlmittelverteiler 21 enthält Auslässe 23 für das Kühlmittel, die der Aufnahme 15 mit aufnehmbarem Schrumpffutter 12 zugewandt sind. Das in dem Kühlmittelverteiler 21 bzw. 22 geführte Kühlmittel tritt bei eingeschalteter Kühleinrichtung 20 aus den Auslässen 23 unter Druck aus und beaufschlagt die Aufnahme 15 mit aufnehmbarem Schrumpffutter 12 zu deren Kühlung außenseitig. Besteht das Kühlmittel z.B. aus Kühlwasser, so wird dieses aus den Auslässen 23 herausgespritzt, wodurch die Aufnahme 15 und insbesondere das Schrumpffutter 12 damit zur Abkühlung bespritzt wird.

Der mindestens eine Kühlmittelverteiler 21, 22 ist in einen Kühlmittelkreislauf eingebunden, der geschlossen sein kann und eine Kühlmittelversorgung 24, z.B. mit einer Kühlmittelpumpe 25, aufweist, an die der mindestens eine Kühlmittelverteiler 21, 22 z.B. mittels einer Versorgungsleitung 26 bzw. 27 angeschlossen ist. Die Kühlmittelversorgung 24 weist einen Kühlmittelbehälter 28 auf, der als Sammelbehälter zur Aufnahme des herunterlaufenden Kühlmittels, mit dem die Aufnahme 15 mit aufnehmbarem Schrumpffutter 12 beaufschlagt wird, ausgebildet und im Unterschrank 14 enthalten ist. Die Kühlmittelpumpe 25 ist z.B. als Tauchpumpe mit Filter ausgebildet und innerhalb des Kühlmittelbehälters 28 angeordnet.

Die Einrichtung 10 weist ferner mindestens eine Leitvorrichtung 40 auf, die zur Kühlung relativ zur Aufnahme 15 mit aufnehmbarem Schrumpffutter 12 in eine Leitstellung bewegbar ist, in der die Leitvorrichtung 40 die Aufnahme 15 mit Schrumpffutter 12 umgibt. Die Leitvorrichtung 40 dient zur Leitung des Kühlmittels und Abschirmung derart, dass das Kühlmittel, insbesondere Kühlwasser, nicht unorientiert verspritzt wird. Die Leitvorrichtung 40 steht mit der Kühlmittelversorgung 24, insbesondere dem Kühlmittelbehälter 28, in Verbindung, z.B. derart, dass die Leitvorrichtung 40 in letzteren ausmündet. Beim gezeigten Ausführungsbeispiel ist der mindestens eine Kühlmittelverteiler 21, 22 als separater Teil ausgebildet und innerhalb der Leitvorrichtung angeordnet. Er ist aus einem Leitungsteil 29 bzw. 30, insbesondere aus einem Rohr, gebildet, der in seiner Wandung 31 als Wandungsdurchbrüche, z.B. Bohrungen, gebildete Auslässe 23 für das Kühlmittel enthält. Der mindestens eine Kühlmittelverteiler 21, 22 kann aus mindestens einem Ringsegment oder geschlossenen Ringteil gebildet sein. Beim gezeigten Ausführungsbeispiel ist dieser aus einem Linearteil gebildet, der etwa parallel zur Längsmittelachse 32 der Aufnahme 15 verläuft. Der mindestens eine Kühlmittelverteiler 21, 22 kann in Bezug auf die Aufnahme 15 mit aufnehmbarem Schrumpffutter 12 beweglich sein. Beim gezeigten Ausführungsbeispiel hingegen ist der mindestens eine Kühlmittelverteiler 21, 22 als räumlich feststehender Teil der Einrichtung 10 ausgebildet und hierbei z.B. an der Innenseite der Leitvorrichtung 40 befestigt. Die Aufnahme 15 mit aufnehmbarem Schrumpffutter 12 hingegen ist in Bezug auf den feststehenden Kühlmittelverteiler 21, 22 zur Kühlung in dessen Wirkungsbereich hinein und gegensinnig aus dessen Wirkungsbereich heraus bewegbar.

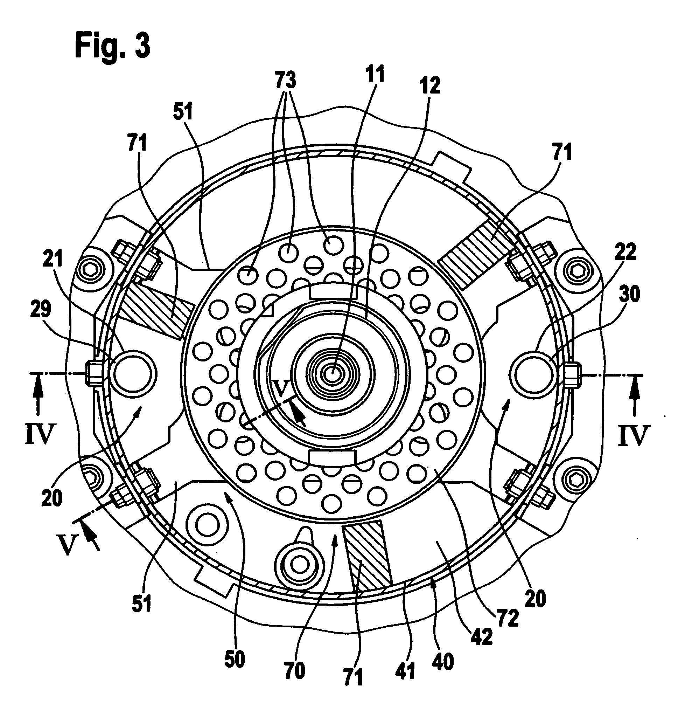

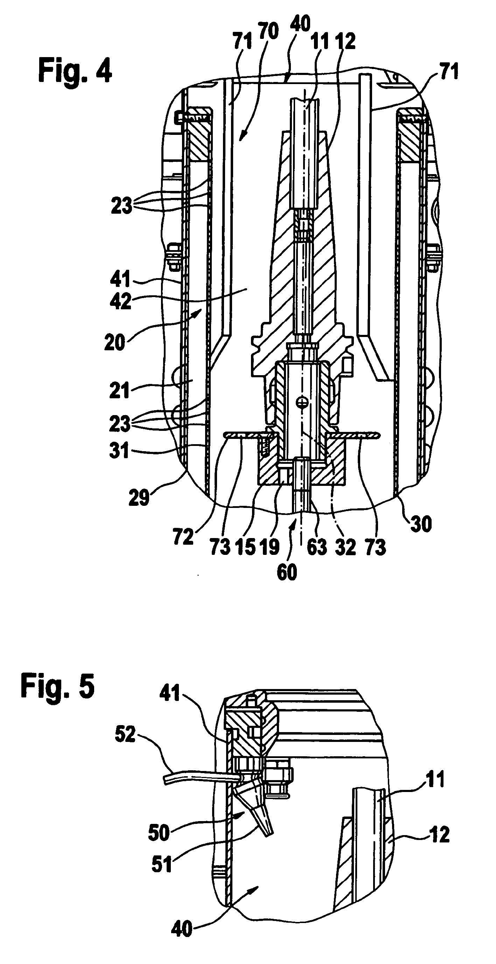

Die Leitvorrichtung 40 weist ein zur Aufnahme 15 koaxiales Rohr 41 mit davon umschlossenem inneren Ringraum 42 auf. Zur Kühlung ist die Aufnahme 15 mit aufnehmbarem Schrumpffutter 12 in den Ringraum 42 hinein und aus diesem gegensinnig heraus beweglich, und zwar etwa in Richtung der Längsmittelachse 32. Wie insbesondere Fig. 3 und 4 erkennen lassen, ist der mindestens eine Kühlmittelverteiler 21, 22 innerhalb des Rohres 41 angeordnet und daran befestigt. Er verläuft etwa achsparallel zum Rohr 41. In der Ausbildung mit zwei Kühlmittelverteilern 21, 22 können diese entsprechend Fig. 3 im Rohr 41 in etwa gleichen Umfangswinkelabständen voneinander, z.B. diametral zueinander, angeordnet sein.

Wie sich insbesondere aus Fig. 3 und 5 ergibt, ist die Einrichtung 10 ferner mit einer Blaseinrichtung 50 versehen, die von einer nicht gezeigten Druckgasquelle, insbesondere Druckluftquelle, z.B. in Form eines Druckluftnetzes, speisbar ist. Die Blaseinrichtung 50 weist mindestens eine Blasdüse 51 auf, von denen gemäß Fig. 3 z.B. mehrere, z.B. vier, in Umfangswinkelabständen voneinander im Rohr 41 angeordnet sind. Die mindestens eine Blasdüse 51 ist schräg nach unten geneigt angeordnet und zum in der Aufnahme 15 aufnehmbaren Schrumpffutter 12 gerichtet. Sie ist zum Abblasen von an der Aufnahme 15 mit aufnehmbarem Schrumpffutter 12 anhaftendem Kühlmittel, z.B. Kühlwasser, mit Druckgas, z.B. Druckluft, über eine schematisch angedeutete Versorgungsleitung 52 speisbar. Erkennbar ist die Blaseinrichtung 50, insbesondere die mindestens eine Blasdüse 51, in Fig. 5 am oberen Ende der Leitvorrichtung 40, insbesondere des Rohres 41, angeordnet.

Die Aufnahme 15 für das Schrumpffutter 12 ist mittels einer Antriebseinrichtung 60 in Richtung ihrer Längsmittelachse 32 bewegbar. Die Antriebseinrichtung 60 weist einen zur Längsmittelachse 32 etwa koaxialen Translationsantrieb auf, der z.B. druckmittelbetrieben ist und insbesondere aus einem Pneumatikzylinder 61 besteht mit räumlich fest angeordnetem Zylindergehäuse 62 und relativ dazu verschiebbarer Kolbenstange 63, die mit ihrem in den Zeichnungen oberen Ende an der Aufnahme 15 angreift. Der Pneumatikzylinder 61 ist mit Anschlussleitungen 64 und 65 versehen, über die er mit einer Druckluftquelle, z.B. einem Druckluftnetz, verbindbar ist. Die Anschlussleitung 64 dient z.B. der Druckluftzufuhr zum Ausfahren der Kolbenstange 63 nach oben, während die Anschlussleitung 65 der Druckluftzufuhr zum Absenken der Kolbenstange 63 nach unten dient.

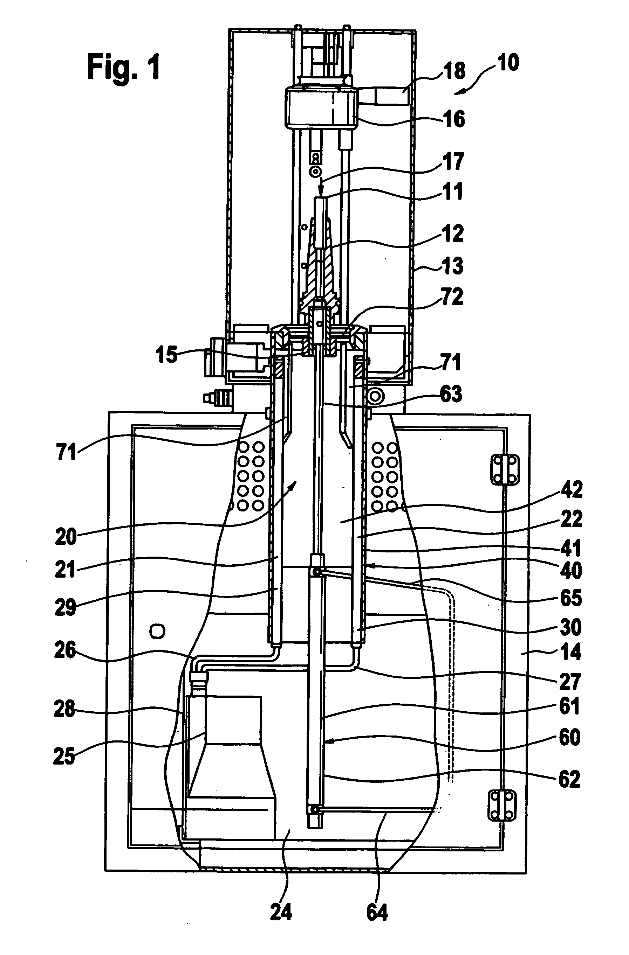

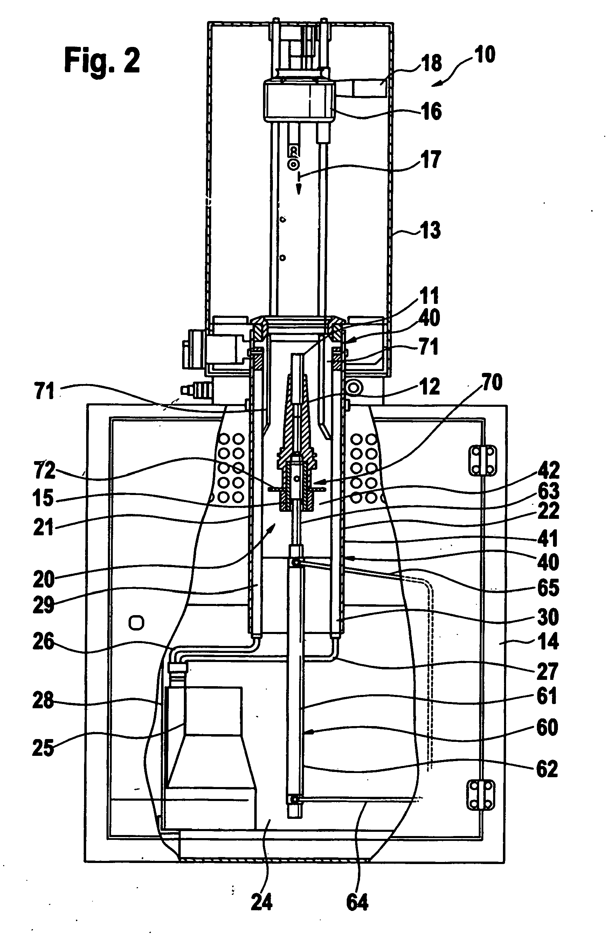

In Fig. 1 ist die Kolbenstange 63 der Antriebseinrichtung 60 nach oben ausgefahren, wodurch die Aufnahme 15 für das Schrumpffutter 12 in eine Ausgangsposition gebracht ist, in der das Schrumpffutter 12 mit eingesetztem Werkzeug 11 auf die Aufnahme 15 von oben her gestellt werden kann. In dieser Ausgangsposition wird sodann die Erwärmungseinrichtung 16 manuell durch Anfassen am Griff 18 und Bewegen in Pfeilrichtung 17 so weit nach unten abgesenkt, dass die nicht sichtbare Polscheibe der mindestens einen Induktionsspule in der Erwärmungseinrichtung 16 auf dem oberen Teil des Schrumpffutters 12, welches das Werkzeug 11 enthält, aufliegt. In dieser Position der Erwärmungseinrichtung 16 kann die Spulenposition z.B. elektromagnetisch gespannt werden. In dieser Ausgangsposition erfolgt dann das induktive Einschrumpfen des Werkzeugs 11 in das Schrumpffutter 12. Hiernach ist die Aufnahme 15 mit Schrumpffutter 12 aus dieser Ausgangsposition heraus durch Aktivierung des Pneumatikzylinders 61 langsam in Fig. 1 nach unten in den Wirkungsbereich des mindestens einen Kühlmittelverteilers 21, 22 hinein bewegbar. Hierbei wird dem Kühlmittelverteiler 21, 22 entsprechendes Kühlmittel mittels der Kühlmittelpumpe 25 zugeführt, das aus den Auslässen 23 herausgespritzt wird, so dass die Aufnahme 15 mit dem Schrumpffutter 12 beim Absenken mit diesem Kühlmittel bespritzt und dadurch gekühlt wird. Nach geringer Zeit, z.B. in der Größenordnung von lediglich 20 Sekunden, ist die Aufnahme 15 mit Schrumpffutter 12 in die tiefste Stellung in Fig. 2 abgesenkt, woraufhin der Pneumatikzylinder 61 umgesteuert wird derart, dass dessen Kolbenstange 63 nun gegensinnig nach oben ausfährt und darüber die Aufnahme 15 mit Schrumpffutter 12 nach oben bewegt wird. Hierbei wird die Blaseinrichtung 50 aktiviert, so dass deren nach unten gerichtete Blasdüsen 51 die Aufnahme 15 mit Schrumpffutter 12 beaufschlagen, wodurch mittels Druckgas, insbesondere Druckluft, das an der Aufnahme 15 und dem Schrumpffutter 12 anhaftende Kühlmittel abgeblasen wird. Das herabtropfende Kühlmittel wird durch die Leitvorrichtung 40 geleitet und gelangt von dieser nach unten in die Kühlmittelversorgung 24, insbesondere den Kühlmittelbehälter 28. Hat die Aufnahme 15 mit Schrumpffutter 12 beim Hochfahren der Kolbenstange 63 wieder die Ausgangsposition gemäß Fig. 1 erreicht, kann das Schrumpffutter 12 entnommen werden. Der gesamte Zyklus ist in kurzer Zeit durchlaufen, z.B. in ca. 30 Sekunden, wobei hiernach das Schrumpffutter 12 mit Werkzeug 11 von Hand erfasst und wegtransportiert werden kann. Das Schrumpffutter 12 ist kalt, wobei dieses etwa die Temperatur des kühlen Kühlmittels hat, so dass dieses nicht etwa im heißen Zustand berührt werden muss. Die Kühleinrichtung 20 bewirkt eine sehr schnelle Kühlung der Aufnahme 15 mit Schrumpffutter 12 darauf, wodurch sich eine Zeitersparnis ergibt, die die Produktivität erhöht. Von Vorteil ist ferner, dass Schrumpffutter 12 mit allen möglichen Geometrien mittels der Kühleinrichtung 20 durch direkte Wasserkühlung gekühlt werden können, ohne dass jeweils Anpassungselemente an unterschiedliche Futtergeometrien erforderlich sind. Dadurch wird der Aufwand erheblich reduziert und eine weitere Zeitersparnis erreicht. Da das Schrumpffutter 12 schon nach kurzer Zeit der Abkühlung erfasst werden kann und nicht mehr heiß ist, wird die Bedienungssicherheit erhöht.

Die Einrichtung 10 weist Führungsmittel 70 zwischen der Aufnahme 15 mit aufnehmbarem Schrumpffutter 12 einerseits und der Leitvorrichtung 40, insbesondere dessen Rohr 41, andererseits auf. Mittels der Führungsmittel 70 ist die Aufnahme 15 mit aufnehmbarem Schrumpffutter 12 zumindest auf einem Teil des Weges bei der Bewegung aus der Ausgangsposition heraus und in die Ausgangsposition zurück in Bezug auf die Leitvorrichtung 40, insbesondere das Rohr 41, radial abstützbar und führbar. Die Führungsmittel 70 sind aus längsverlaufenden Führungsstegen 71 einerseits, z.B. an der Leitvorrichtung 40, insbesondere dem Rohr 41, und aus einer kreisförmigen Zentrierplatte 72 andererseits, z.B. an der Aufnahme 15, gebildet. Die Zentrierplatte 52 ist bei der Bewegung zwischen den Führungsstegen 71 in Radialrichtung abgestützt und in Axialrichtung längs den Führungsstegen 71 linear geführt. Für den Durchlass insbesondere des Kühlmittels weisen die Zentrierplatte 73 und/oder die Aufnahme 15 für das Schrumpffutter 12 Durchlassöffnungen 73 bzw. 19 auf, durch die das Kühlmittel hindurch ablaufen kann.

## Patentansprüche

1. Einrichtung zum thermischen Spannen und Entspannen von Werkzeugen (11) in Schrumpffuttern (12), mit einer Aufnahme (15) für ein Schrumpffutter (12), einer zum aufgenommen Schrumpffutter (12) hin und von diesem weg beweglichen Erwärmungseinrichtung (16) und einer Kühleinrichtung (20) zur Abkühlung des erwärmten Schrumpffutters (12), die mindestens einen relativ zur Aufnahme (15) mit aufnehmbarem Schrumpffutter (12) beweglichen, ein vorzugsweise flüssiges Kühlmittel, z. B. Kühlwasser, führenden Kühlmittelverteiler (21, 22) mit der Aufnahme (15) mit aufnehmbarem Schrumpffutter (12) zugewandten Auslässen (23) für das Kühlmittel aufweist, das aus den Auslässen (23) unter Druck austritt und die Aufnahme (15) mit aufnehmbarem Schrumpffutter (12) zur Kühlung außenseitig beaufschlagt,
**dadurch gekennzeichnet,**
**dass** der mindestens eine Kühlmittelverteiler (21, 22) als separater Teil ausgebildet und innerhalb einer Leitvorrichtung (40) angeordnet ist und Führungsmittel (70) für die Aufnahme (15) mit aufnehmbarem Schrumpffutter (12) vorgesehen sind, mittels denen die Aufnahme (15) mit aufnehmbarem Schrumpffutter (12) zumindest auf einem Teil des Weges bei der Bewegung aus der Ausgangsposition heraus und in die Ausgangsposition zurück in Bezug auf die Leitvorrichtung (40) radial abstützbar und führbar ist.

2. Einrichtung nach Anspruch 1, **dadurch gekennzeichnet, dass** der mindestens eine Kühlmittelverteiler (21, 22) in einen Kühlmittelkreislauf eingebunden ist, der eine Kühlmittelversorgung (24), z.B. mit Kühlmittelpumpe (25), aufweist, an die der mindestens eine Kühlmittelverteiler (21, 22), z.B. mittels einer Versorgungsleitung (26, 27), angeschlossen ist.

3. Einrichtung nach Anspruch 2, **dadurch gekennzeichnet, dass** die Kühlmittelversorgung (24) einen Kühlmittelbehälter (28) aufweist, der als Sammelbehälter zur Aufnahme des Kühlmittels ausgebildet ist, mit dem die Aufnahme (15) mit aufnehmbarem Schrumpffutter (12) beaufschlagt wird.

4. Einrichtung nach Anspruch 2 oder 3, **dadurch gekennzeichnet, dass** die Kühlmittelpumpe (25) als Tauchpumpe ausgebildet und im Kühlmittelbehälter (28) angeordnet ist.

5. Einrichtung nach einem der Ansprüche 1 bis 4, **dadurch gekennzeichnet, dass** die mindestens eine Leitvorrichtung (40) zur Kühlung relativ zur Aufnahme (15) mit aufnehmbarem Schrumpffutter (12) in eine diese mit Abstand umgebende Leitstellung beweglich ist und mit der Kühlmittelversorgung (24), insbesondere dem Kühlmittelbehälter (28), in Verbindung steht.

6. Einrichtung nach einem der Ansprüche 1 bis 5, **dadurch gekennzeichnet, dass** der mindestens eine Kühlmittelverteiler (21, 22) aus einem Leitungsteil (29, 30), z.B. aus einem Rohr, gebildet ist, der in seiner Wandung (31) als Wandungsdurchbrüche, z.B. Bohrungen, gebildete Auslässe (23) für das Kühlmittel enthält.

7. Einrichtung nach einem der Ansprüche1 bis 6, **dadurch gekennzeichnet, dass** der mindestens eine Kühlmittelverteiler (21, 22) aus mindestens einem Ringsegment oder geschlossenen Ringteil oder aus einem Linearteil gebildet ist.

8. Einrichtung nach einem der Ansprüche 1 bis 7, **dadurch gekennzeichnet, dass** der mindestens eine Kühlmittelverteiler (21, 22) als räumlich feststehender Teil der Einrichtung (10) ausgebildet ist und dass die Aufnahme (15) mit aufnehmbarem Schrumpffutter (12) in Bezug auf den feststehenden Kühlmittelverteiler (21, 22) zur Kühlung in dessen Wirkungsbereich hinein und gegensinnig aus dessen Wirkungsbereich heraus bewegbar ist.

9. Einrichtung nach einem der Ansprüche 1 bis 8, **dadurch gekennzeichnet, dass** die Leitvorrichtung (40) ein koaxiales Rohr (41) mit innerem Ringraum (42) aufweist, wobei die Aufnahme (15) mit aufnehmbarem Schrumpffutter (12) zur Kühlung in den Ringraum (42) hinein und aus dem Ringraum (42) heraus beweglich ist.

10. Einrichtung nach Anspruch 9, **dadurch gekennzeichnet, dass** der mindestens eine Kühlmittelverteiler (21, 22) innerhalb des Rohres (41) angeordnet ist.

11. Einrichtung nach Anspruch 9 oder 10, **dadurch gekennzeichnet, dass** der mindestens eine Kühlmittelverteiler (21, 22) an der Innenseite des Rohres (41) befestigt ist.

12. Einrichtung nach einem der Ansprüche 9 bis 11, **dadurch gekennzeichnet, dass** der mindestens eine Kühlmittelverteiler (21, 22) in seiner Ausbildung als Rohr etwa achsparallel zur Leitvorrichtung (40), insbesondere zu deren Rohr (41), verläuft.

13. Einrichtung nach einem der Ansprüche 1 bis 12, **dadurch gekennzeichnet, dass** die Kühleinrichtung (20) zumindest zwei Kühlmittelverteiler (21, 22) aufweist.

14. Einrichtung nach Anspruch 13, **dadurch gekennzeichnet, dass** jeder Kühlmittelverteiler (21, 22) als Rohr ausgebildet ist und die Rohre innerhalb der Leitvorrichtung (40) in etwa gleichen Umfangswinkelabständen voneinander angeordnet sind.

15. Einrichtung nach einem der Ansprüche 1 bis 14, **gekennzeichnet durch** eine von einer Druckgasquelle, z.B. Druckluftquelle, speisbare Blaseinrichtung (50), die mindestens eine Blasdüse (51) aufweist, die zu dem mittels der Aufnahme (15) aufnehmbaren Schrumpffutter (12) gerichtet ist und zum Abblasen von an der Aufnahme (15) mit aufnehmbarem Schrumpffutter (12) anhaftendem Kühlmittel mit Druckgas, z.B. Druckluft, speisbar ist.

16. Einrichtung nach einem der Ansprüche 1 bis 15, **dadurch gekennzeichnet, dass** die mindestens eine Blasdüse (51) am oberen Ende der Leitvorrichtung (40), insbesondere des Rohres (41), angeordnet ist.

17. Einrichtung nach Anspruch 15 oder 16, **dadurch gekennzeichnet, dass** die Blaseinrichtung (50) mehrere in Umfangswinkelabständen voneinander angeordnete Blasdüsen (51) aufweist.

18. Einrichtung nach einem der Ansprüche 15 bis 17, **dadurch gekennzeichnet, dass** die mindestens eine Blasdüse (51) schräg nach unten geneigt angeordnet ist.

19. Einrichtung nach einem der Ansprüche 1 bis 18, **dadurch gekennzeichnet, dass** die Aufnahme (15) für das Schrumpffutter (12) mittels einer Antriebseinrichtung (60) in Richtung ihrer Längsmittelachse (32) bewegbar ist.

20. Einrichtung nach Anspruch 19, **dadurch gekennzeichnet, dass** die Antriebseinrichtung (60) einen zur Längsmittelachse (32) der Aufnahme (15) etwa koaxialen, insbesondere druckmittelbetriebenen, Translationsantrieb, z.B. einen Pneumatikzylinder (61), aufweist.

21. Einrichtung nach Anspruch 19 oder 20, **dadurch gekennzeichnet, dass** die Aufnahme (15) für das Schrumpffutter (12) von einer Ausgangsposition, in der die Aufnahme des Schrumpffutters (12), das thermische Spannen und die Entnahme des Schrumpffutters (12) möglich sind, in den Wirkungsbereich des mindestens einen Kühlmittelverteilers (21, 22) hinein und gegensinnig aus diesem heraus zurück in die Ausgangsposition bewegbar ist.

22. Einrichtung nach Anspruch 1, **dadurch gekennzeichnet, dass** die Führungsmittel (70) aus längsverlaufenden Führungsstegen (71) einerseits, z.B. an der Leitvorrichtung (40), insbesondere dem Rohr (41) und aus einer kreisförmigen Zentrierplatte (72) andererseits, z.B. an der Aufnahme (15), gebildet sind, die bei der Bewegung zwischen den Führungsstegen (71) in Radialrichtung abgestützt ist und in Axialrichtung längs den Führungsstegen (71) linear geführt ist.

23. Einrichtung nach einem der Ansprüche 1 bis 22, **dadurch gekennzeichnet, dass** die Aufnahme (15) und/oder die Zentrierplatte (72) Durchlassöffnungen (19 bzw. 73) für den Durchlass insbesondere des Kühlmittels aufweisen.

## Claims

1. Device for thermal clamping and release of tools (11) in shrink-fit chucks (12), having a holder (15) for a shrink-fit chuck (12), a heating device (16) that can be moved towards the shrink-fit chuck (12) accommodated and away from the latter and a cooling device (20) for cooling the heated shrink-fit chuck (12), which has at least one coolant distributor (21, 22) which can be moved relative to the holder (15) of the shrink-fit chuck (12) that can be accommodated and carries a preferably liquid coolant, for example cooling water, having outlets (23), facing the holder (15) with shrink-fit chuck (12) that can be accommodated, for the coolant, which emerges from the outlets (23) under pressure and acts on the outside of the holder (15) with shrink-fit chuck (12) that can be accommodated in order to cool it, **characterized in that** the at least one coolant distributor (21, 22) is constructed as a separate part and arranged within a guide device (40), and guide means (70) are provided for the holder (15) with shrink-fit chuck (12) that can be accommodated, by means of which the holder (15) with shrink-fit chuck (12) that can be accommodated can be supported radially and guided, at least over part of the distance, during the movement out of the initial position and back into the initial position in relation to the guide device (40).

2. Device according to Claim 1, **characterized in that** the at least one coolant distributor (21, 22) is incorporated in a coolant circuit, which has a coolant supply (24), for example with coolant pump (25), to which the at least one coolant distributor (21, 22) is connected, for example by means of a supply line (26, 27).

3. Device according to Claim 2, **characterized in that** the coolant supply (24) has a coolant container (28) which is constructed as a collecting container to hold the coolant which is applied to the holder (15) with shrink-fit chuck (12) that can be accommodated.

4. Device according to Claim 2 or 3, **characterized in that** the coolant pump (25) is constructed as a submersible pump and is arranged in the coolant container (28).

5. Device according to one of Claims 1 to 4, **characterized in that**, for the purpose of cooling, the at least one guide device (40) can be moved relative to the holder (15) with shrink-fit chuck (12) that can be accommodated into a guiding position surrounding the latter at a distance, and is connected to the coolant supply (24), in particular the coolant container (28).

6. Device according to one of Claims 1 to 5, **characterized in that** the at least one coolant distributor (21, 22) is formed from a guide part (29, 30), for example from a pipe, which contains outlets (23) for the coolant which are formed in its wall (31) as wall apertures, for example drilled holes.

7. Device according to one of Claims 1 to 6, **characterized in that** the at least one coolant distributor (21, 22) is formed from at least one annular segment or closed annular part or from a linear part.

8. Device according to one of Claims 1 to 7, **characterized in that** the at least one coolant distributor (21, 22) is constructed as a physically fixed part of the device (10), and **in that** the holder (15) with shrink-fit chuck (12) that can be accommodated can be moved in relation to the stationary coolant distributor (21, 22) into its active range for the purpose of cooling and in the opposite direction out of its active range.

9. Device according to one of Claims 1 to 8, **characterized in that** the guide device (40) has a coaxial pipe (41) with internal annular chamber (42), it being possible for the holder (15) with shrink-fit chuck (12) that can be accommodated to be moved into the annular chamber (42) for the purpose of cooling and out of the annular chamber (42).

10. Device according to Claim 9, **characterized in that** the at least one coolant distributor (21, 22) is arranged inside the pipe (41).

11. Device according to Claim 9 or 10, **characterized in that** the at least one coolant distributor (21, 22) is fixed to the inside of the pipe (41).

12. Device according to one of Claims 9 to 11, **characterized in that**, in its design as a pipe, the at least one coolant distributor (21, 22) runs approximately axially parallel to the guide device (40), in particular to its pipe (41).

13. Device according to one of Claims 1 to 12, **characterized in that** the cooling device (20) has at least two coolant distributors (21, 22).

14. Device according to Claim 13, **characterized in that** each coolant distributor (21, 22) is constructed as a pipe and the pipes are arranged inside the guide device (40) at approximately equal circumferential angle distances from one another.

15. Device according to one of Claims 1 to 14, **characterized by** a blowing device (50) which can be fed from a pressurized gas source, for example a compressed air source, which has at least one blower nozzle (51) which is aimed towards the shrink-fit chuck (12) which can be accommodated by means of the holder (15) and can be fed with pressurized gas, for example compressed air, in order to blow away coolant adhering to the holder (15) with shrink-fit chuck (12) that can be accommodated.

16. Device according to one of Claims 1 to 15, **characterized in that** the at least one blower nozzle (51) is arranged at the upper end of the guide device (40), in particular the pipe (41).

17. Device according to Claim 15 or 16, **characterized in that** the blowing device (15) has a plurality of blower nozzles (51) arranged at circumferential angle distances from one another.

18. Device according to one of Claims 15 to 17, **characterized in that** the at least one blower nozzle (51) is arranged to be inclined obliquely downwards.

19. Device according to one of Claims 1 to 18, **characterized in that** the holder (15) for the shrink-fit chuck (12) can be moved in the direction of its longitudinal central axis (32) by means of a drive device (60).

20. Device according to Claim 19, **characterized in that** the drive device (60) has a translational drive, for example a pneumatic cylinder (61), which is approximately coaxial with the longitudinal central axis (32) of the holder (15) and is in particular operated by a pressurized medium.

21. Device according to Claim 19 or 20, **characterized in that** the holder (15) for the shrink-fit chuck (12) can be moved from an initial position, in which picking up the shrink-fit chuck (12), thermal clamping and removal of the shrink-fit chuck (12) are possible, into the active range of the at least one coolant distributor (21, 22) and in the opposite direction out of the latter back into the initial position.

22. Device according to Claim 1, **characterized in that** the guide means (70) are formed firstly by guide webs (71) running longitudinally, for example on the guide device (40), in particular the pipe (41), and secondly by a circular centring plate (72), for example on the holder (15), which is supported in the radial direction between the guide webs (71) during the movement and in the axial direction is guided linearly along the guide webs (71).

23. Device according to one of Claims 1 to 22, **characterized in that** the holder (15) and/or the centring plate (72) have passage openings (19 and 73, respectively) for the passage in particular of the coolant.

## Revendications

1. Dispositif de serrage et de desserrage thermiques d'outils (11) dans des mandrins frettés (12), qui présente un logement (15) pour un mandrin fretté (12), un dispositif de chauffage (16) qui peut être rapproché et éloigné du mandrin fretté (12) qu'il reprend et un dispositif de refroidissement (20) qui refroidit le mandrin fretté (12) chauffé et qui présente au moins un répartiteur (21, 22) de fluide de refroidissement doté de sorties (23) pour le fluide de refroidissement tournées vers le logement (15) dans lequel le mandrin fretté (12) peut être repris, qui peut être déplacé par rapport au logement (15) dans lequel le mandrin fretté (12) peut être repris et qui guide un fluide de refroidissement de préférence liquide, par exemple de l'eau de refroidissement, le fluide de refroidissement sortant des sorties (23) sous pression et sollicitant le logement (15) dans lequel le mandrin fretté (12) peut être repris pour le refroidir par l'extérieur,
**caractérisé en ce que**
le ou les répartiteurs (21, 22) de fluide de refroidissement sont configurés comme pièces séparées et disposées à l'intérieur d'un dispositif de guidage (40), des moyens de guidage (70) au moyen desquels le logement (15) dans lequel le mandrin fretté (12) peut être repris pouvant s'appuyer radialement et être guidé au moins sur une partie du parcours de déplacement depuis la position initiale et en retour dans la position initiale par rapport au dispositif de guidage (40) étant prévus pour le logement (15) dans lequel le mandrin fretté (12) peut être repris.

2. Dispositif selon la revendication 1, **caractérisé en ce que** le ou les répartiteurs de fluide de refroidissement (21, 22) sont incorporés dans un circuit de fluide de refroidissement qui présente une alimentation (24) en fluide de refroidissement, par exemple une pompe (25) à fluide de refroidissement à laquelle le ou les répartiteurs (21, 22) de fluide de refroidissement sont raccordés par exemple au moyen d'un conduit d'alimentation (26, 27).

3. Dispositif selon la revendication 2, **caractérisé en ce que** l'alimentation (24) en fluide de refroidissement présente un récipient (28) à fluide de refroidissement qui est configuré comme récipient de collecte qui reprend le fluide de refroidissement qui alimente le logement (15) dans lequel le mandrin fretté (12) peut être repris.

4. Dispositif selon les revendications 2 ou 3, **caractérisé en ce que** la pompe (25) à fluide de refroidissement est configurée comme pompe immergée et est disposée dans le récipient (28) à fluide de refroidissement.

5. Dispositif selon l'une quelconque des revendications 1 à 4, **caractérisé en ce que** le ou les dispositifs de guidage (40) qui assurent le refroidissement par rapport au logement (15) dans lequel le mandrin fretté (12) peut être repris peuvent être déplacés dans une position de guidage qui entoure ce logement à distance et communique avec l'alimentation (24) en fluide de refroidissement et en particulier avec le récipient (28) à fluide de refroidissement.

6. Dispositif selon l'une quelconque des revendications 1 à 5, **caractérisé en ce que** le ou les répartiteurs (21, 22) de fluide de refroidissement sont formés d'une partie de guidage (29, 30), par exemple d'un tube, qui contient dans sa paroi (31) des sorties (23) de fluide de refroidissement configurées comme perforations de la paroi, par exemple comme alésages.

7. Dispositif selon l'une quelconque des revendications 1 à 6, **caractérisé en ce que** le ou les répartiteurs (21, 22) de fluide de refroidissement sont formés d'au moins un segment annulaire ou d'une partie annulaire fermée, ou encore d'une partie linéaire.

8. Dispositif selon l'une quelconque des revendications 1 à 7, **caractérisé en ce que** le ou les répartiteurs (21, 22) de fluide de refroidissement sont configurés comme partie fixe du dispositif fixe (10) et **en ce que** pour être refroidi, le logement (15) dans lequel le mandrin fretté (12) peut être repris peut être introduit dans la zone de travail du répartiteur fixe (21, 22) de fluide de refroidissement et en être extrait dans le sens opposé.

9. Dispositif selon l'une quelconque des revendications 1 à 8, **caractérisé en ce que** le dispositif de guidage (40) présente un tube coaxial (41) dotée d'un espace annulaire intérieur (42), le logement (15) dans lequel le mandrin fretté (12) peut être repris pouvant être enfoncé et sorti de l'espace annulaire (42) pour être refroidi.

10. Dispositif selon la revendication 9, **caractérisé en ce que** le ou les répartiteurs (21, 22) de fluide de refroidissement sont disposés à l'intérieur du tube (41).

11. Dispositif selon les revendications 9 ou 10,
**caractérisé en ce que** le ou les répartiteurs (21, 22) de fluide de refroidissement sont fixés sur le côté intérieur du tube (41).

12. Dispositif selon l'une quelconque des revendications 9 à 11, **caractérisé en ce que** le ou les répartiteurs (21, 22) de fluide de refroidissement à configuration tubulaire s'étendent sensiblement parallèlement à l'axe du dispositif de guidage (40) et en particulier à son tube (41).

13. Dispositif selon l'une quelconque des revendications 1 à 12, **caractérisé en ce que** le dispositif de refroidissement (20) présente au moins deux répartiteurs (21, 22) de fluide de refroidissement.

14. Dispositif selon la revendication 13, **caractérisé en ce que** chaque répartiteur (21, 22) de fluide de refroidissement a une configuration tubulaire et **en ce que** les tubes sont disposés dans le dispositif de guidage(40) à des écarts angulaires périphériques mutuels sensiblement identiques.

15. Dispositif selon l'une quelconque des revendications 1 à 14, **caractérisé par** un dispositif de soufflage (50) qui peut être alimenté par une source de gaz sous pression, par exemple une source d'air sous pression, et qui présente au moins une tuyère de soufflage (51) qui est orientée vers le mandrin fretté (12) qui peut être repris dans le logement (15) et qui peut être alimentée en gaz sous pression et par exemple en air sous pression pour souffler le fluide de refroidissement qui adhère au logement (15) dans lequel le mandrin fretté (12) peut être repris.

16. Dispositif selon l'une quelconque des revendications 1 à 15, **caractérisé en ce que** la ou les tuyères de soufflage (51) sont disposées à l'extrémité supérieure du dispositif de guidage (40) et en particulier du tube (41).

17. Dispositif selon les revendications 15 ou 16, **caractérisé en ce que** le dispositif de soufflage (50) présente plusieurs tuyères de soufflage (51) qui sont disposées à écart angulaire mutuel à la périphérie.

18. Dispositif selon l'une des revendications 15 à 17, **caractérisé en ce que** la ou les tuyères de soufflage (51) sont disposées obliquement vers le bas.

19. Dispositif selon l'une quelconque des revendications 1 à 18, **caractérisé en ce que** le logement (15) pour le mandrin fretté (12) peut être déplacé dans le sens de son axe longitudinal central (32) au moyen d'un dispositif d'entraînement (60).

20. Dispositif selon la revendication 19, **caractérisé en ce que** le dispositif d'entraînement (60) présente un entraînement en translation, par exemple un vérin pneumatique (61), en particulier alimenté en fluide sous pression, et qui s'étend sensiblement coaxialement par rapport à l'axe longitudinal central (32) du logement (15).

21. Dispositif selon les revendications 19 ou 20, **caractérisé en ce que** le logement (15) prévu pour le mandrin fretté (12) peut être déplacé depuis une position initiale dans laquelle la réception du mandrin fretté (12), le serrage thermique et l'enlèvement du mandrin fretté (12) sont possibles jusque dans la zone de travail du ou des répartiteurs (21, 22) de fluide de refroidissement et être sorti de cette zone en sens opposé pour revenir dans la position initiale.

22. Dispositif selon la revendication 1, **caractérisé en ce que** les moyens de guidage (70) sont formés d'une part de nervures longitudinales de guidage (71), par exemple prévues sur le dispositif de guidage (40) et en particulier sur le tube (41), et d'autre part d'une plaque circulaire de centrage (72) prévue par exemple sur le logement (15), qui est soutenue dans la direction radiale lorsqu'elle se déplace entre les nervures de guidage (71) et guidée en ligne droite dans la direction axiale le long des nervures de guidage (71).

23. Dispositif selon l'une quelconque des revendications 1 à 22, **caractérisé en ce que** le logement (15) et/ou la plaque de centrage (72) présentent des ouvertures de passage (19 ou 73) qui permettent en particulier le passage du fluide de refroidissement.
